# EUROPÄISCHE PATENTSCHRIFT

(11) **EP 1 946 029 B1**
(45) Veröffentlichungstag und Bekanntmachung des Hinweises auf die Patenterteilung: **14.12.2011**
(21) Anmeldenummer: 06806195.1
(22) Anmeldetag: 11.10.2006
(51) Int. Cl.: F28D 21/00, E03F 3/00

(54) **WÄRMETAUSCHER ZUR ABWASSERWÄRMENUTZUNG**
HEAT EXCHANGER FOR UTILISING THE HEAT FROM WASTE WATER
ECHANGEUR DE CHALEUR DESTINE A L'UTILISATION DE LA CHALEUR DES EAUX USEES

(30) Priorität: 11.10.2005 DE 102005048689
(43) Veröffentlichungstag der Anmeldung: 23.07.2008
(73) Patentinhaber: Uhrig Kanaltechnik GmbH, 78187 Geisingen (DE)
(72) Erfinder: UHRIG, Thomas, 78187 Geisingen (DE)
(74) Vertreter: Müller-Boré & Partner Patentanwälte
(86) Internationale Anmeldenummer: PCT/EP2006/009832
(87) Internationale Veröffentlichungsnummer: WO 2007/042283

(56) Entgegenhaltungen:
- DE-A1- 3 521 585
- DE-A1- 19 719 311
- DE-U1-202004 018 084

## Beschreibung

Die Erfindung betrifft Wärmetauscherelemente nach dem Oberbegriff von Anspruch 1. DE 197 19311 A offenbart ein solches Element,

Energiegewinnung aus Abwasser ist seit längerem bekannt. Zur Anwendung kommen beispielsweise Abwasserrohrleitungen, die bereits bei der Herstellung mit Wärmetauschern sowie Vor- und Rückläufen für die Wärmetauscher ausgerüstet sind. Ein solches System ist beispielswiese aus DE 35 21 585 A1 bekannt

Da aber die meisten Rohrleitungssysteme für Abwasser nicht mit Wärmetauschern ausgerüstet sind, kommt einerseits lediglich eine komplette Neuverlegung von mit Wärmetauschern bereits versehenen Abwasserrohren in Frage oder ein nachträgliches Ausrüsten der Abwasserrohrleitungen mit Wärmetauschern. Im Hinblick auf die nachträgliche Ausrüstung sind Wärmetauscherelemente bekannt, die am frei zugänglichen Rohrleitungsanfang - bzw. ende eingebracht und nach dem Einbringen zur festen Lagerung einbetoniert werden. Dazu ist es aber erforderlich, daß über eine Baugrube der entsprechende Rohrleitungsquerschnitt freigelegt wird, um den nachträglichen Einbau zu ermöglichen.

Ein weiterer Nachteil bei der Nachrüstung von Abwasserrohrleitungen mit Wärmetauschern besteht darin, daß diese aufgrund der Querschnittserhöhung einen Aufstau in der Abwasserrohrleitung zur Folge haben, der nicht tolerierbar ist. Um dies zu vermeiden, besteht die Möglichkeit, die Vor-, Rücklauf- und Verteilerleitungen des Wärmeaustauschsystems in den Scheitel der Abwasserrohrleitung einzubauen, so daß ein Aufstau von Abwasser durch die Möglichkeit der sehr dünnwandigen Ausführung des Wärmetauscherelementes vermieden werden kann. Dies hat aber den Nachteil, daß die im Scheitelbereich des Abwasserrohrs befindlichen Leitungen den Abfluß behindern, da bei entsprechend hohem Abwasserspiegel Hygieneartikel, Toilettenpapier und andere Materialien an den Rohrleitungen hängen bleiben.

Es ist Aufgabe der vorliegenden Erfindung, ein Wärmetauscherelement zur Gewinnung von Energie aus dem Abwasser vorzuschlagen, welches nachträglich in bestehende Abwasserrohrleitungen angebracht werden kann, ohne dabei den Freispiegelabfluß des Abwassers zu behindern. Daneben soll auch ein entsprechendes Rohrleitungssystem für Abwasserrohrleitungen vorgeschlagen werden.

Die Aufgabe wird im Hinblick auf das Wärmetauscherelement gemäß Anspruch 1 und im Hinblick auf das Rohrleitungssystem gemäß Anspruch 10 gelöst.

Ein Grundgedanke des erfindungsgemäßen Wärmetauscherelements zum insbesondere nachträglichen Einbau in Abwasserrohrleitungen besteht darin, dessen Querschnittshöhe so auszulegen, daß ein Aufstau des im Freispiegel abfließenden Abwassers verhindert werden kann und gleichzeitig eine Anordnung der Leitungen zum Vorlauf, Rücklauf und zur Verteilung des Wärmetauschermediums im Abwasserrohrleitungsquerschnitt und somit außerhalb des Wärmetauscherelements zu vermeiden. Dazu weist das Wärmetauscherelement eine als wärmeleitende Tauschfläche dienende Oberseite mit daran angeordneten Wärmetauscherkammern auf. Im Querschnitt gesehen bildet die Oberseite des Wärmetauscherelementes eine vorzugsweise mittig angeordnete Einlaufrinne mit beidseits der Einlaufrinne anschließenden Ablaufflächen aus, die vorzugsweise schräg zur Einlaufrinne hin abfallen. Die Oberseite des Wärmetauscherelementes ist zweckmäßig, im Querschnitt gesehen, symmetrisch ausgebildet. Die beidseits der Einlaufrinne angeordneten Ablaufflächen werden auch als Bermen bezeichnet. Der unterhalb der Oberseite zwischen der Einlaufrinne und den Ablaufflächen gebildete Bereich stellt genug Freiraum zur Verfügung, die Leitungen bzw. Versorungsleitungen des Wärmetauschersystems zum Vorlauf, Rücklauf und zur Verteilung des Wärmetauschermediums anzuordnen. Zur Lagesicherung sind die entsprechenden Leitungen dabei mit der Oberseite des Wärmetauscherelementes entsprechend verbunden. In bekannter Weise sind an der als Tauschfläche dienenden Oberseite des Wärmetauscherelementes Wärmetauscherkammern vorgesehen, die unterhalb der Oberseite des als Wärmetauscherfläche dienenden Wärmetauscherelements angeordnet sind. Es versteht sich dabei, daß in bekannter Weise die Wärmetauscherkammern mit den Vorlauf-, Rücklauf- und Verteilerleitungen verbunden sind, so daß das Wärmetauschermedium durch die vorgenannten Kammern bzw. Leitungen strömen kann. Um einen Aufstau des Abwassers durch das Vorhandensein des Wärmetauscherelements in der Abwasserrohrleitung zu verhindern, ist die Sohle der Einlaufrinne, also der tiefste Punkt der Einlaufrinne, so ausgebildet, daß er als Auflager zur Anordnung des Wärmetauscherelements in der Abwasserrohrleitung dient und somit praktisch keine Stufe im tiefsten Bereich der Abwasserohrleitung bildet. Um das Wärmetauscherelement lagesicher und ohne zusätzliche Befestigungsmaßnahmen im Abwasserrohr anordnen zu können, sind die unteren Bereiche der Vorlauf-, Rücklauf- und Verteilerleitungen und/oder die freien Ränder der Ablaufflächen ebenfalls als Auflager zur Anordnung des Wärmetauscherelementes ausgebildet. Entsprechend der Konfiguration der Abwasserrohrleitung kann demnach beispielsweise eine Dreipunktlagerung des Wärmetauscherelementes über die freien Randbereiche der Ablaufflächen bzw. Bermen sowie des Sohlpunktes der Einlaufrinne erreicht werden.

Mit Vorteil weist das Wärmetauscherelement in seinen Endbereichen Anschlußkonfigurationen zum druckdichten und zugfesten Anschluß eines oder mehrerer weiterer Wärmetauscherelemente auf. Die Druckdichtigkeit wird dabei so ausgelegt, daß der in den Leitungen zum Vorlauf, Rücklauf und zur Verteilung des Wärmetauschermediums anstehende Druck die Verbindung zwischen einzelnen Wärmetauscherelementen nicht lösen kann. Zugfestigkeit zwischen den Wärmetauscherelementen soll deshalb vorteilhafterweise hergestellt werden, um sicherzustellen, daß im Reparatur- oder Austauschfall die Möglichkeit besteht, die einzelnen, miteinander verbundenen Wärmetauscherelemente, ohne daß sich diese voneinander lösen, im Abwasserrohr beispielsweise in Richtung eines Kanaleinstiegs ziehen zu können. Druckdichtigkeit und Zugfestigkeit können dabei über bekannte Maßnahmen wie Dichtungen, besondere Schnappverbindungen etc. erreicht werden. Zweckmäßigerweise sind die Wärmetauscherkammern zumindest im Bereich der Einlaufrinne ausgebildet. Mit Vorteil können die Wärmetauscherkammern aber, im Querschnitt gesehen, unterhalb der gesamten Oberseite des Wärmetauscherelementes vorgesehen sein, also auch insbesondere im Bereich der sich an die Einlaufrinne anschließenden Ablaufflächen. Der Wirkungsgrad des Wärmetauscherelementes erhöht sich durch eine maximale Anordnung von Wärmetauscherkammern, wenn gleichzeitig sichergestellt werden kann, daß Abwasser nicht nur im Bereich der Einlaufrinne abfließt, sondern auch im Bereich der Ablaufflächen bzw. Bermen.

Vorzugsweise kann die Längs- bzw. Quererstreckung des Wärmetauscherelementes so gewählt werden, daß es durch einen oberirdischen Kanaleinstieg der betreffenden Abwasserrohrleitung einbringbar ist. Entsprechend der lichten Weite von Kanaleinstiegen soll dabei vorzugsweise die Längs- bzw. Quererstreckung 80 cm und besonders bevorzugt 62,5 cm nicht überschritten werden. Indem die Abmessungen des Wärmetauscherelementes in entsprechender Weise ausgelegt werden, besteht die Möglichkeit, die einzelnen Wärmetauscherelemente nachträglich in Abwasserrohrleitungen einzubringen, ohne dabei über eine Baugrube Zugang zu den Rohrleitungen schaffen zu müssen, da die einzelnen Wärmetauscherelemente durch die zahlreich vorhandenen Kanaleinstiege in das Abwasserrohr eingebracht werden können. Somit ist es problemlos möglich, die Wärmetauscherelemente durch den Kanaleinstieg einzubringen, um sie anschließend in der Rohrleitung zu verlegen. Es versteht sich dabei, daß zur Erlangung eines erforderlichen Wirkungsgrades mehrere einzelne Wärmetauscherelemente in die Abwasserrohrleitung eingebracht und miteinander verbunden werden.

Zweckmäßigerweise ist die Einlaufrinne in Form eines bogenförmigen Abschnittes ausgebildet. Dabei sind beispielsweise kreisbogenförmige, ovale oder elliptische Konfigurationen der Einlaufrinne denkbar; ferner kann die Einlaufrinne einen Eiquerschnitt oder Drachenquerschitt aufweisen oder als Maulprofil ausgebildet sein. Welche Konfiguration letztlich gewählt wird, hängt auch von dem Abwasseranfall und der Querschnittskonfiguration des Abwasserrohres ab. Aufgrund des Wärmetauscherelementes und dessen Querschnittskonfiguration mit Einlaufrinne und vorzugsweise daran anschließenden Ablaufflächen, kann die Schleppkraft des entsprechenden Abschnittes des Abwasserrohres in vorteilhafter Weise erhöht werden.

In diesem Zusammenhang ist es zweckmäßig, die Oberseite des Wärmetauscherelementes aus korrosionsbeständigem und Fließgeschwindigkeiten nicht vermindernden Material, z.B. Edelstahl herzustellen. Geeignete Materialwahl beeinflußt dabei neben der Fließgeschwindigkeit insbesondere auch die Schleppkraft, um zusätzlich zu einer vorteilhaften Querschnittskonfiguration des Wärmetauscherelementes einen störungsfreien Ablauf des Abwassers im Freispiegel positiv zu beeinflussen.

Mit Vorteil sind die Wärmetauscherkammern mittels wenigstens einem unterhalb der Oberseite des Wärmetauscherelementes angeordneten Profilteils ausgebildet. Die Anlage des Profilteils an der Oberseite bildet dabei die Konfiguration der einzelnen Wärmetauscherkammern aus. In Längsrichtung des Wärmetauscherelementes kann ein solches Profilteil eine stegartige Trennung einzelner Kammern in bestimmten Bereichen bedingen. Die stegartige Anlage muß dabei nicht zwangsläufig in Längsrichtung d.h. in Abflußrichtung des Abwassers, erfolgen, sondern kann auch schräg oder quer dazu ausgebildet sein, um eine vorteilhafte Verströmung des Wärmetauschermediums innerhalb der Wärmetauscherkammern zur Erhöhung des Wirkungsgrades zu erlangen. Bei der Konfiguration der Wärmetauscherkammern und auch der Auslegungen der Leitungen für den Vorlauf, Rücklauf und die Verteilung des Wärmetauschermediums kann dabei vorteilhafterweise auf das bekannte Tichelmann-System zurückgegriffen werden, um den Wirkungsgrad der Wärmetauscherelemente zu optimieren. Mittels des Profilteils können somit auf kostengünstige Weise die Wärmetauscherkammern ausgebildet werden, die sich vorzugsweise über den gesamten Bereich der Oberseite des Wärmetauscherelements erstrecken, um die gesamte Oberfläche der Oberseite des Wärmetauscherelements zum Wärmetausch auszunutzen. Es versteht sich dabei, daß das Material der Oberseite des Wärmetauscherelementes so gewählt wird, daß ein optimierter Wärmeaustausch zwischen dem Abwasser und dem Wärmetauschermedium stattfinden kann, was auch durch eine möglichst dünnwandige Ausbildung der Oberseite des Wärmetauscherelementes positiv beeinflußt wird.

Zweckmäßigerweise kann ein Wärmetauscherelement auch als End- oder Anfangselement ausgebildet sein und dazu an einem seiner freien Enden einen rampenartigen, keilförmig ausgebildeten Bereich aufweisen, der sich bis in den Sohlbereich der Einlaufrinne erstreckt. Zwar stellt der tiefste Punkt der Einlaufrinne keine Abflußhindernis im Abwasserrohrkanal dar, jedoch die sich an den Sohlpunkt bzw. tiefsten Punkt der Einlaufrinne anschließenden Bereiche, insbesondere der Bereich der Ablaufflächen, die beidseits der Einlaufrinne angeordnet sind. Um einen Aufstau von Abwasser in diesen Bereichen zu verhindern, wird die rampenartige Ausbildung vorgeschlagen. Sie kann so ausgeführt werden, daß die freien Endbereiche der rampen- bzw. keilförmigen Bereiche so ausgelegt sind, daß sie bei Anordnung im Abwasserrohr einen zusätzlichen Auflagebereich bilden und somit über den gesamten Anfangsbereich eines Wärmetauscherelementes keinerlei Stufe im Abwasserrohr bilden. Je nach den Erfordernissen kann die rampenartige Ausbildung kürzer oder länger sein, um die Steigung entsprechend flacher oder größer auszubilden.

Die Oberseite des Wärmetauscherelementes ist vorteilhafterweise mit einer Profilierung versehen, die das Bilden eines Biofilms bzw. einer Sielhaut durch abfließendes Wasser reduziert. Bekanntlich bildet Abwasser mit der Zeit auf der ablaufenden Fläche einen Biofilm bzw. eine Sielhaut, die bei über ein Wärmetauscherelement ablaufendem Abwasser dessen Wirkungsgrad in unerwünschter Weise herabsetzt. Eine profilierte Ablauffläche sorgt dabei für Strömungsverhältnisse, die die Ausbildung eines solchen Biofilms stark vermindert und bei günstigster Auslegung unter Umständen ganz verhindern kann. Als Profilierung sind dabei beispielsweise Erhebungen verschiedenster geometrischer Struktur denkbar, wie etwa Quader, Pyramiden oder sogar eine rinnen- bzw. spiralförmige Konfiguration. Auch ist eine Bürstung oder Schleifstruktur als. Oberflächenprofilierung denkbar.

Das erfindungsgemäße Rohrleitungssystem für Abwasserrohrleitungen besteht zunächst aus einzelnen, in üblicher Weise miteinander verbundenen Rohrleitungen und wenigstens einem oberirdischen Kanaleinstieg eines bestimmten lichten Durchmessers sowie aus nachträglich in das Rohrleitungssystem bzw. die Rohrleitungen eingebrachten Wärmetauscherelementen, die eine Trockenwasserrinne zur Leitung des Wassers bilden und in der Lage sind, die Wärme des Abwassers zur Energiegewinnung zu nutzen, wobei die Längs- bzw. Quererstreckung der einzelnen Wärmetauscherelemente so ausgelegt ist, daß zumindest eine Erstreckung geringfügig kleiner ist als der lichte Durchmesser des Kanaleinstiegs, damit die einzelnen Wärmetauscherelemente oberirdisch in die Rohrleitung durch den Kanaleinstieg eingebracht werden könnten.

Mit Vorzug sind bei einem Rohrleitungssystem mehrere Strecken aus miteinander verbundenen Wärmetauscherelementen vorgesehen, da das Abwasser nur über eine bestimmte Strecke hinweg hinsichtlich seiner Temperatur wirtschaftlich ausgenutzt werden kann. Es sollen deshalb nicht mit Wärmetauschern versehene Bereiche des Abwasserrohres freigelassen werden, in welchen sich neues Abwasser ansammeln kann, welches erst danach wiederum einer neuen Strecke von Wärmetauscherelementen zur Energiegewinnung zugeführt wird.

Vorteilhafterweise ist bei dem vorgeschlagenen Rohrteitungssystem der Auftrieb der in die Abwasserrohrleitung eingebrachten Wärmetauscherelemente - insbesondere auch bei Leerstand der im Wärmetauscherelement vorhandenen Wärmetauscherkammern und Leitungen für den Vorlauf, den Rücklauf sowie die Verteilung des Wärmetauschermediums - bei Vollfüllung der Abwasserrohrleitung kleiner als die Gewichtskraft der in die Abwasserrohrleitung eingebrachten Wärmetauscherelemente. Die miteinander verbundenen Wärmetauscherelemente sind demnach so schwer, daß ein Auftrieb bei Vollfüllung des Abwasserkanals und bei leeren Wärmetauscherleitungen bzw. -kammern nicht möglich ist. Dabei sind bevorzugterweise die einzelnen Wärmetauscherelemente so miteinander verbunden, daß möglichst kein Abwasser unterhalb der einzelnen Wärmetauscherelemente eindringen kann.

Mit Vorteil ist bei dem Rohrleitungssystem - in Fließrichtung des Abwassers gesehen - im Bereich der eingebrachten Wärmetauscherelemente zusätzlich wenigstens ein Spül- bzw. Schwallschieber zum zeitweisen Unterbrechen des Abwasserabflusses angeordnet. Mit Vorzug kann der Schieber dabei im Bereich eines Kanaleinstiegs angeordnet sein, weil dort mehr freier Raum zum Einbau gegeben ist. Ein solcher Schieber hat verschiedene Vorteile. Unter anderem bildet sich in Abwasserkanälen und somit auch an der Oberseite der Wärmetauscherelemente bereits nach kurzer Zeit die erwähnte Sielhaut, die den Wirkungsgrad der Wärmetauscher stark herabsetzt. Um die Ausbildung einer solchen Sielhaut zu vermeiden, zumindest jedoch zu verringern, wird ein Schwall- bzw. Spülschieber eingebaut, der sich vorzugsweise im Endbereich der Strecke von verlegten Wärmetauscherelementen - in Fließrichtung des Abwassers gesehen - befindet. Ein solcher Schwall - bzw. Spülschieber kann in kurzen Intervallen das Abwasser aufstauen, um es anschließend schwallartig über die Oberflächen der Wärmetauscherelemente hinwegströmen zu lassen. Unter diesen sich daraufhin ergebenden turbulenten Bedingungen beim Abfluß des Abwassers kann die Ausbildung einer Sielhaut verringert werden. Ein solcher Schwall - bzw. Spülschieber hat noch einen weiteren Vorteil, indem eine Vergleichmäßigung der Abwassermenge herbeigeführt werden kann, die über die Wärmetauscher hinweggeführt wird. Bekanntlich ist die Trockenwetterabflußmenge über den gesamten Tag gesehen nicht konstant, so daß ein Ausgleich - über den gesamten Tag gesehen - der Abflußmenge durch den Einbau eines solchen Schiebers herbeigeführt werden kann. So kann beispielsweise, weil in der Nacht der Anfall einer Trockenwetterabflußmenge gering ist, das Abwasser bei höherem Anfall, beispielsweise am frühen Abend, mittels des betreffenden Schiebers aufgestaut und über Nacht bei abklingendem Abwasseranfall kontinuierlich den Wärmetauschern zugeführt werden. Selbstverständlich bedingt ein solcher Schieber aufgrund des erzeugten Schwalls auch einen Reinigungseffekt durch Abführen schwererer Gegenstände, die sich auf dem Wärmetauscherelement ablagern können.

Bei diesem Rohrleitungssystem ist das Wärmetauscherelement so ausgebildet, wie es zuvor beschrieben ist.

Ein Verfahren zum Einbringen eines Wärmetauscherelements in ein Rohrleitungssystem bzw. eine Rohrleitung eines Abwassersystems weist vorzugsweise die folgenden Schritte auf:
- Einbringen der einzelnen Wärmetauscherelemente durch einen oberirdischen Kanaleinstieg
- Auflegen eines ersten Wärmetauscherelements im unteren Bereich der Rohrleitung auf deren Innenoberfläche
- Anordnen einer Vorrichtung zum Verschieben von einem oder mehreren Wärmetauscherelementen
- Ansetzen der Vorrichtung zum Verschieben am Wärmetauscherelement und
- anschließendes Verschieben des Wärmetauscherelementes.

Die Vorrichtung zum Verschieben der Wärmetauscherelemente wird dabei vorzugsweise in der Abwasserrohrleitung bzw. im Bereich des Kanaleinstieges verspannt, um die Kräfte aufnehmen zu können, die zum Vorschieben der Wärmetauscherelemente in Richtung der Abwasserrohrleitungsachse erforderlich ist. Die Vorrichtung kann dazu beispielsweise Hydraulikzylinder aufweisen und über eine geeignete Konfiguration so am Wärmetauscherelement befestigt werden, daß ein sicheres Vorschieben sowie ein im Reparatur- oder Austauschfall eventuell erforderliches Zurückziehen der Wärmetauscherelemente möglich ist. Es versteht sich dabei, daß die entsprechende Vorrichtung so ausgestaltet ist, daß sie ebenfalls durch den Kanaleinstieg in die Rohrleitung eingebracht werden kann. Die hat den besonderen Vorteil, daß auch nicht begehbare Rohrleitungen mit Wärmetauscherelementen nachträglich ausgerüstet werden können, da die Verschiebearbeiten im Bereich des Kanaleinstiegs durchgeführt werden. Für den Fall, daß die mit Wärmetauscherelementen nachträglich auszurüstenden Abwasserrohrleitungen bereits ein Gerinne aufweisen, welches nicht einstückig mit der Rohrleitung ausgebildet, sondern nachträglich seinerzeit beispielsweise in Form von Klinkersteinen ausgebildet wurde, kann das Gerinne zuvor entfernt, zumindest jedoch so abgetragen werden, daß ein nachträglicher Einbau von Wärmetauscherelementen ermöglicht wird.

Um eine ausreichende Fläche zum Wärmetausch zur Verfügung zu stellen, werden mehrere Wärmetauscherelemente hintereinander angeordnet, bis eine ausreichende Länge zur Verfügung steht. Dabei kommen folgende weitere Verfahrensschritte zur Anwendung:
- Einbringen eines bzw. mehrerer weiterer Wärmetauschelemente und Auflegen derselben im unteren Bereich der Rohrleitung auf deren Innenoberfläche
- Lösen der Vorrichtung zum Verschieben vom ersten Wärmetauscherelement
- Anschließen des weiteren Wärmetauscherelements an das erste Wärmetauscherelement, gegebenenfalls unter Hinzufügung von Dichtelementen im Anschlußbereich zwischen den Wärmetauscherelementen,
- Anschließendes Ansetzen der Vorrichtung zum Verschieben am weiteren Wärmetauscherelement und
- gemeinsames Verschieben des ersten und des bzw. der weiteren Wärmetauscherelemente in Rohrlängsrichtung.

Die weiteren Verfahrensschritte haben dabei den Vorteil, daß durch das Verschieben der weiteren Wärmetauscherelemente der entsprechende Anschlußbereich an dem bereits verlegten Wärmetauscherelement ausreichend geschlossen werden kann, um eine druck- und auch zugfeste Verbindung zwischen den einzelnen Wärmetauscherelementen zu schaffen. Die druckfeste Verbindung ist notwendig, damit der in den Vor- und Rücklaufleitungen herrschende Innendruck die einzelnen Wärmetauscherelemente nicht auseinander schiebt. Zugfestigkeit ist erforderlich, damit im Austauschfall die miteinander verbundenen Wärmetauscherelemente gemeinsam wieder in Richtung des Kanaleinstieges zurückgezogen werden können.

Zusammenfassend ist es aufgrund des vorgeschlagenen Wärmetauscherelementes, des entsprechenden Rohrleitungssystem und dem beschriebenen Verfahren möglich, Wärmetauscherelemente nachträglich in bereits verlegte Abwasserrohrleitungen einzubringen, ohne daß es dabei erforderlich ist, die Abwasserrohre über eine Baugrube freizulegen, um überhaupt Wärmetauscherelemente einbringen zu können, wie es bislang der Fall war. Ein weiterer Vorteil besteht darin, daß die Wärmetauscherelemente so ausgebildet sind, daß deren Bestandteile Auflager an der entsprechenden Abwasserrohleitungsrinnenwandung ausbilden, wobei es problemlos möglich ist, neben kreisrunden Abwasserrohrleitungsquerschnitten auch andere Querschnitte zu berücksichtigen. Zudem ist es nicht erforderlich, daß die einzelnen Wärmetauscherelemente an der Rohrinnenwandung gesondert befestigt, beispielsweise einbetoniert werden müssen, da das Auflagergewicht nebst den vorhandenen Auflagerstellen völlig ausreichend ist, für eine sichere Anordnung der Wärmetauscherelemente zu sorgen. Die Anwendung der vorgeschlagenen Wärmetauscherelemente bietet sich insbesondere im innerstädtischen Bereich an, wo ein Aufgraben zum Erreichen der Abwasserrohrleitung im Regelfall nicht möglich ist. Jedoch sind gerade im innerstädtischen Bereich genügend Kanaleinstiege vorhanden, die ein Einbringen der Wärmetauscherelemente sowie auch der Vorrichtung zum Verschieben der Wärmetauscherelemente in die Rohrleitung ermöglichen.

Der Grundgedanke des erfindungsgemäßen Wärmetauscherelements zum nachträglichen Einbau in Abwasserrohrleitungen besteht demnach darin, die Geometrie des mit Abwasser benetzten Wärmetauschers, d.h. seine Oberfläche, so zu gestalten, daß
- kein Abflußhindernis durch den nachträglichen Einbau der Wärmetauscherelemente verursacht wird
- die Vor- bzw. Rücklaufleitungen sowie die Wärmetauscherkammern der Wärmetauscherelemente im Fließquerschnitt des Wärmetauschers integriert sind und somit ebenfalls kein Abflußhindernis im Abwasserkanal bzw. der Rohrleitung bilden
- die Wärmetauscherelemente beim Einbringen in die Rohrleitung hinsichtlich ihrer endgültigen Position nicht einbetoniert oder auf andere Weise zusätzlich befestigt werden müssen, was einerseits zusätzliche Arbeitsschritte erspart und andererseits eine nachträgliche Reparatur beispielsweise defekter Verbindungen oder einzelner Wärmetauscherelemente jederzeit ermöglicht, und
- der Einbau der einzelnen Wärmetauscherelemente ohne zu sätzliches Aufgraben bzw. Freilegen der Abwasserrohrleitung von jedem der - im Regelfall zahlreich vorhandenen - Schachteinstiege aus erfolgen kann.

Anhand der nachfolgenden Figuren wird die Erfindung in beispielhafter Weise näher beschrieben.

Es zeigen dabei:
Figur 1: Einen Längsschnitt durch ein Abwasserrohrleitungssystem mit zwei Kanaleinstiegen.
Figur 2: Einen Querschnitt durch eine Abwasserrohrleitung mit einem im unteren Bereich nachträglich angeordneten Wärmetauscher.
Figur 3: Einen Querschnitt durch ein Wärmetauscherelement.
Figur 4: Eine Draufsicht auf ein Wärmetauscherelement.

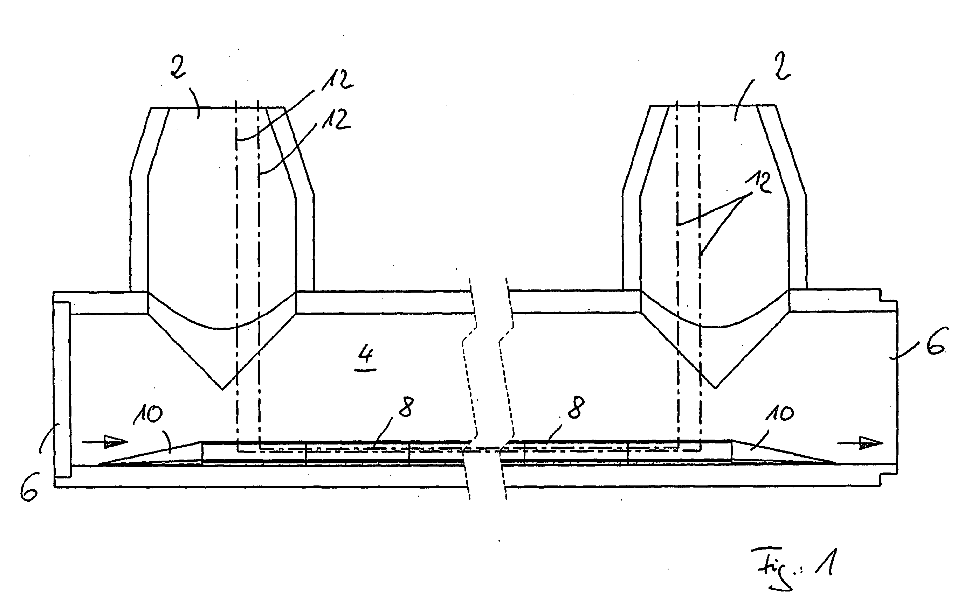

Das in Figur 1 im Längsschnitt gezeigte Abwasserrohrleitungssystem weist zwei Kanaleinstiege 2 auf, die in der Zeichnung nahe zueinander dargestellt sind, weil ein Bereich zwischen den Kanaleinstiegen 2 in der Figur 1 nicht gezeigt ist.

Unterhalb der Kanaleinstiege 2 schließt sich eine Abwasserrohrleitung 4 an, von der, benachbart zu den Kanaleinstiegen 2, deren mit Muffen versehenen Endbereiche 6 dargestellt sind, wobei sich daran weitere nicht gezeigte Abwasserrohrleitungen anschließen. Bei dem gezeigten Abwasserrohrleitungssystem kann es sich beispielsweise um einen Abwasserkanal handeln, der im innerstädtischen Bereich angeordnet ist. Am unteren Punkt der Abwasserrohrleitung 4, also dort wo sich das Abwasser zunächst ansammelt, sind einzelne Wärmetauscherelemente 8 dargestellt, die im Bereich der Kanaleinstiege 2 in als End- bzw. Anfangsstücke ausgebildete Wärmetauscherelementen 10 enden. Diese als End- bzw. Anfangsstücke ausgebildeten Wärmetauscherelemente 10 weisen in ihren freien Endbereichen keilförmige Anstiege auf, um einen Stau des Abwassers vor den nachträglich in die Abwasserrohrleitung 4 eingebrachten Wärmetauscherelementen 8 zu verhindern. Die Länge des keilförmigen Abschnittes, der mit seinem freien Ende an der Innenoberfläche der Abwasserrohrleitung 4 abschließt, kann entsprechend den Erfordernissen in der Länge variabel ausgebildet werden, um steilere oder flachere Gefälle zu bilden.

Gestrichelt dargestellt sind Vorlauf-, Rücklauf und Verteilerleitungen 12, die an den Wärmetauscherelementen 8 bzw. 10 angeordnet sind und im Bereich der Kanaleinstiege 2 aus den betreffenden Wärmetauscherelementen 8 austreten, um nach oben zum oberirdischen Abschluß der Kanaleinstiege 2 geführt zu werden, damit sie an ein nicht dargestelltes, externes und im Regelfall oberirdisch angeordnetes Wärmetauschersystem angeschlossen werden können. Ebenfalls gestrichelt dargestellt sind die Verläufe der Leitungen 12 innerhalb der einzelnen Wärmetauscherelemente 8. Der gewünschte Wirkungsgrad des Wärmetauschersystems sowie die anfallende Abwassermenge und deren Temperatur sowie die entsprechenden Rohrquerschnitte und somit auch die Abmessungen der Wärmetauscherelemente 8 bestimmten schließlich die Gesamtanzahl der hintereinander angeordneten Wärmetauscherelemente 8.

Um die Wärmetauscherelemente 8 in die Rohrleitung einzubringen, ohne dabei die freien Enden der Abwasserrohrleitung mittels Baugruben freilegen zu müssen, sind die Abmessungen der Wärmetauscherelemente 8 so ausgebildet, daß die Wärmetauscherelemente 8 durch den Kanaleinstieg 2 oberirdisch in die Abwasserrohrleitung 4 eingebracht werden können.

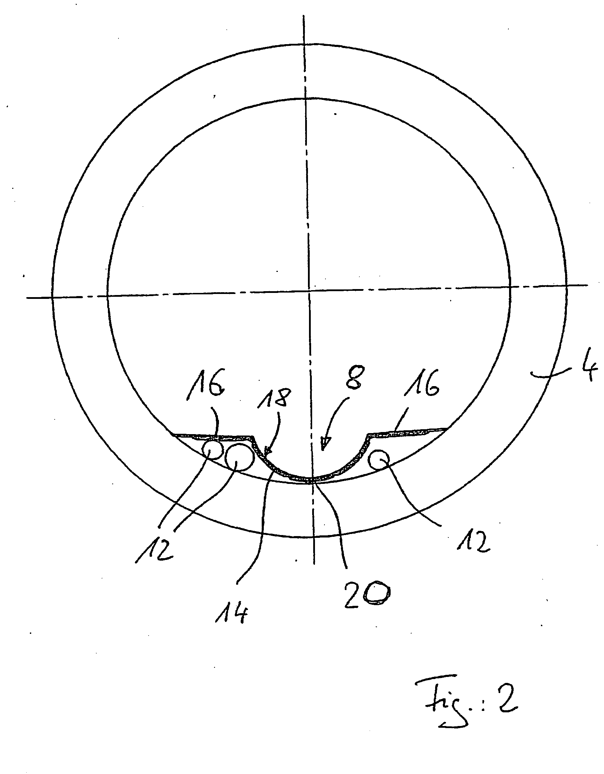

In Figur 2 ist eine Abwasserrohrleitung 4 im Querschnitt gezeigt, die einen kreisrunden Innendurchmesser aufweist. Im unteren Bereich der Rohrleitung 4 ist ein Wärmetauscherelement 8 gezeigt, welches eine Einlaufrinne 14 in Form einer Ausmuldung mit hier beispielsweise kreisbogenförmigen Querschnitt aufweist. An die Einlaufrinne 14 schließen sich beidseitig, vorzugsweise mit einem bestimmten Gefälle hin zur Einlaufrinne 14, ebene Ablaufflächen 16 an, die an der Abwasserrohrinnenwandung enden und dort vorzugsweise aufliegen. Dabei stellen die Einlaufrinne 14 sowie die sich daran anschließenden ebenen Ablaufflächen 16 die Oberseite 18 des Wärmetauscherelementes 8 dar.

Es ist dabei von Vorteil, wenn nicht nur die Einlaufrinne 14, sondern auch die Ablaufflächen 16, die auch als Bermen bezeichnet werden, von dem Abwasser ebenfalls benetzt werden, damit ein Wärmeaustausch nicht nur im Bereich der Einlaufrinne 14, sondern auch im benachbarten Bereich und somit im Bereich der gesamten Oberfläche des Wärmetauscherelements 8 stattfinden kann. Dazu kann die Einlaufrinne 14 so ausgelegt werden, daß die rechts und links neben der Einlaufrinne 14 vorhandenen Ablaufflächen 16 ebenfalls vom Abwasser noch überströmt werden, um eine volle Ausnutzung der als Wärmetauscherfläche dienenden Oberseite 18 der Wärmetauscherelemente 8 bzw. 10 zu erreichen.

Im Bereich zwischen der Einlaufrinne 14 und den Ablaufflächen 16 sind die am Wärmetauscherelement 8 angeordneten Leitungen zum Vorlauf, Rücklauf und zur Verteilung des Wärmetauschermediums gezeigt. Als Auflager bzw. Auflagerpunkte des Wärmetauscherelements 8 auf der Innenwandung der Abwasserrohrleitung 4 können zum einen die Leitungen 12 dienen und zwar mit dem Bereich, mit welchem sie die Innenwandung der Abwasserrohrleitung 4 berühren bzw. an dieser anliegen. Ebenfalls als Auflager bzw. Auflagerpunkte des Wärmetauscherelementes 8 dienen einerseits der Sohlpunkt 20 - also der tiefste Punkt - der Einlaufrinne sowie die, im Querschnitt gesehen, freien Endbereiche der Ablaufflächen 16 und zwar dort, wo sie jeweils die Innenwandung der Abwasserrohrleitung 4 berühren bzw. auf dieser aufliegen. Es versteht sich dabei, daß die Querschnittsausbildung des Wärmetauscherelementes 8 einschließlich der Lage der Leitungen 12 so ausgelegt wird, daß sie an den jeweiligen Querschnitt der betreffenden Abwasserrohrleitung 4 angepaßt werden können. Da mehrere Auflager bzw. Auflagerpunkte somit zur Verfügung stehen, ist entsprechende Flexibilität vorhanden. Im Regelfall wird stets der Sohlpunkt 20 eines jeden Wärmetauscherelements 8 als Auflager dienen, insbesondere was die als End- bzw. Anfangsstücke ausgebildeten Wärmetauscherelemente 10 betrifft, weil es dadurch sichergestellt werden kann, daß eine Stufe in der Abwasserrohrleitung 4 aufgrund der Anordnung der Wärmetauscherelemente 8 bzw. 10 verhindert werden kann.

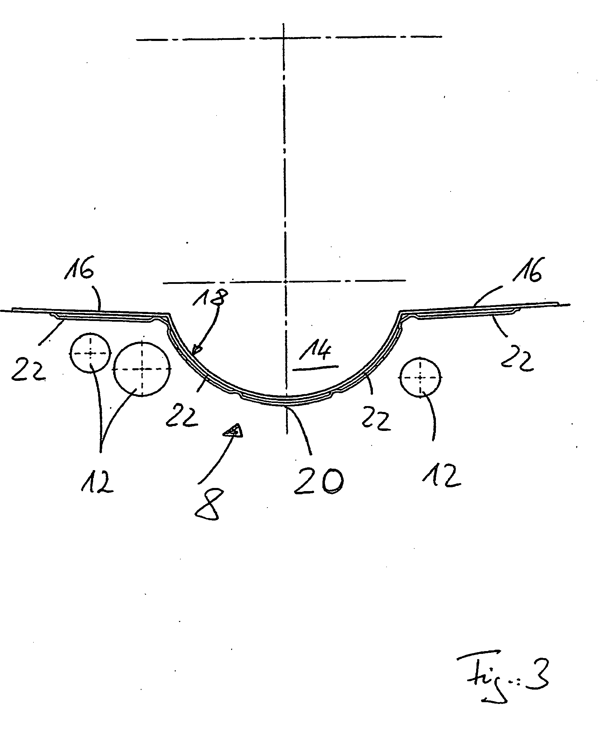

Figur 3 zeigt das Wärmetauscherelement 8 im Querschnitt, wobei in dieser Abbildung die Wärmetauscherkammern 22 zu erkennen sind, die an der Oberseite 18 der Wärmetauscherelemente 8 angeordnet sind und sich vorzugsweise über die gesamte Oberseite 18 erstrecken. Die Kammern 22 werden durch ein vorzugsweise dünnwandiges Profilteil 24 gebildet, welches unterhalb der Oberseite 18 des Wärmetauscherelementes 8 angeordnet ist. Folglich werden die Kammern durch die Oberseite 18 des Wärmetauscherelementes 8 und des darunter liegenden Profilteils 24 gebildet. Um mehrere Kammern 22 auszubilden, liegt das Profilteil 24 an verschiedenen Stellen direkt an der Oberseite 18 des Wärmetauscherelementes 8 an, so daß sich zwischen den Anlagepunkten bzw. -strecken einzelne Kammern 22 ausbilden. Um einen optimierten Wärmeaustausch zu erreichen, sind die Kammern 22 nicht nur über den gesamten Bereich der Oberseite 18 des Wärmetauscherelementes 8 angeordnet, sondern zudem auch - im Querschnitt gesehen - relativ schmal ausgebildet. In den Kammern 22 zirkuliert das Wärmetauschermedium, im Regelfall Wasser, angereichert mit Additiven gegen Korrosion, welches durch auf der Oberseite 18 ablaufendes Abwasser gewärmt wird. Die Kammern 22 stehen dabei mit den Leitungen 12 in Verbindung, um ein Wärmetauschersystem bereitzustellen, wobei an einer Stelle in die Vorlaufleitung 12 relativ kühles Wärmetauschermedium eingebracht wird, welches dann nach Durchlaufen der Kammern 22 und Erwärmen durch das Abwasser durch die Rücklaufleitung 12 abgeführt wird.

Um eine optimierten Wärmeaustausch zwischen dem Abwasser und dem in den Kammern 22 befindlichen Medium zu erreichen, ist die Oberseite 18 der Wärmetauscherelemente 8 bzw. 10 möglichst dünnwandig ausgeführt.

Im freien Endbereich der Wärmetauscherelemente 8, d.h. an deren vorderen bzw. hinteren Abschluß kann noch ein zusätzliches - nicht gezeigtes - Abstützelement angebracht werden, welche sich senkrecht zum Einlaufgerinne 14 bzw. den Ablaufflächen 16 nach unten hin in Richtung auf die Leitungen 12 zu erstreckt. Es versteht sich dabei, daß der untere, freie Rand dieses Abstützelementes sich nicht weiter als bis zum Sohlpunkt 20 bzw. den Unterkanten der Leitungen 12 erstreckt, damit die Lagerung des Wärmetauscherelementes 8 über den Sohlpunkt 20, die unteren Bereiche der Leitungen 12 und/oder die freien Endbereiche der Ablaufflächen 16 nicht unterbrochen wird. Das Abstützelement muß dabei Ausnehmungen für die Wärmekammern 22, die Einlaufrinne 14 und die Leitungen 12 aufweisen und schließt in den äußeren Randbereichen vorzugsweise mit den freien Enden der Ablaufflächen 16 ab. Bei einem kreisrunden Innendurchmesser der Abwasserrohrleitung würde das Abstützelement in entsprechender Weise einen kreisbogenförmigen Verlauf gleichen Radius' zwischen den Anschlußbereichen der Ablaufflächen 16 aufweisen. Natürlich kann ein solches Abstützelement auch zwischen den Endbereichen der Wärmetauscherelemente zusätzlich ausgebildet sein. Bei z.B. kreisförmigen Querschnitten von Abwasserrohrleitungen würde sich solche, zwischen den Endbereichen angeordnete Abstützelemente ebenfalls als kreisbogenartige Bauteile darstellen.

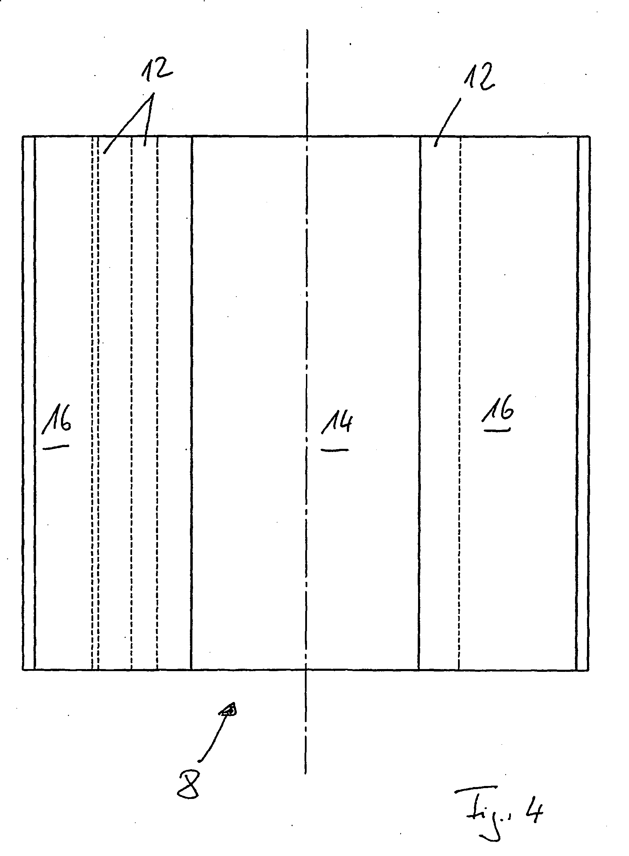

Figur 4 zeigt schließlich eine Draufsicht auf ein Wärmetauscherelement 8 mit der hier mittig angeordneten Einlaufrinne 14 und den seitlich, sich an die Einlaufrinne 14 anschließenden glatten bzw. ebenen, schräg zur Einlaufrinne 14 hin verlaufenden Ablaufflächen 16, die im Bedarfsfall ein Ablaufen von Abwasser zur Einlaufrinne 14 hin erlauben.

Nicht näher beschrieben werden muß die Anordnung bzw. der Verlauf der in Figur 4 nicht dargestellten Kammern 22 mit den Leitungen 12 zur optimalen Energiegewinnung. In bekannter Weise kommt dabei das Prinzip von Tichelmann zur Anwendung, welches einen größstmöglichen Wärmeaustauch und somit eine größstmögliche Energiegewinnung bzw. Wirkungsgrad ermöglicht

### Bezugszeichenliste

- 2: Kanaleinstieg
- 4: Abwasserrohrleitung
- 6: Endbereich
- 8: Wärmetauscherelement
- 10: Wärmetauscherelement in Form eines End- bzw. Anfangsstücks
- 12: Vorlauf-, Rücklauf- und Verteilerleitungen
- 14: Einlaufrinne
- 16: Ablauffläche oder Berme
- 18: Oberseite Wärmetauscherelement
- 20: Sohlpunkt
- 22: Wärmetauscherkammer
- 24: Profilteil

## Patentansprüche

1. Wärmetauscherelement (8, 10) zum Einbau in Abwasserrohrleitungen (4), dessen Oberseite (18) eine wärmeleitende Tauschfläche mit daran angeordneten Wärmetauscherkammern (22) aufweist,
das Wärmetauscherelement (8, 10) im Querschnitt eine Einlaufrinne (14) und beidseits daran anschließende Ablaufflächen (16) aufweist, **dadurch gekennzeichnet, daß** im als Freiraum ausgebildeten Bereich unterhalb der Oberseite zumischen der Einlaufrinne (14) und den Ablaufflachen (16) Leitungen (12) zum Vorlauf, Rücklauf und zur Verteilung eines Wärmetauschermediums angeordnet sind, wobei
der Sohlpunkt (20) der Einlaufrinne (14), der untere Bereich der Leitungen (12) und/oder die freien Ränder der Ablaufflächen (16) als Auflager zur Anordnung des Wärmetauscherelements (8, 10) in der Abwasserrohrleitung (4) ausgebildet sind.

2. Wärmetauscherelement nach Anspruch 1, bei welchem das Wärmetauscherelement (8, 10) in seinen Endbereichen Anschlusskonfigurationen zum druckdichten und zugfesten Anschluß eines oder mehrerer weiterer Wärmetauscherelemente (8) aufweist

3. Wärmetauscherelement nach Anspruch 1 oder 2, bei welchem die Wärmetauscherkammern (22) zumindest im Bereich der Einlaufrinne (14) ausgebildet sind.

4. Wärmetauscherelement nach einem der Ansprüche 1 bis 3, bei welchem die Längs- bzw. Quererstreckung des Wärmetauscherelements (8, 10) so gewählt ist, dass es durch einen oberirdischen Kanaleinstieg (2) der betreffenden Abwasserrohrleitung (4) einbringbar ist und vorzugsweise eine Länge von 80 cm und besonders bevorzugt eine Länge von 62,5 cm nicht überschreitet.

5. Wärmetauscherelement nach einem der Ansprüche 1 bis 4, wobei die Einlaufrinne (14) in Form eines bogenförmigen Abschnitts ausgebildet ist

6. Wärmetauscherelement nach einem der Ansprüche 1 bis 4, bei welchem dessen Oberseite (18) aus einem korrosionsbeständigem und Fließgeschwindigkeiten nicht verminderndem Material, z.B. Edelstahl, besteht.

7. Wärmetauscherelement nach einem der Ansprüche 1 bis 6, bei welchem die Wärmetauscherkammern (22) in Form wenigstens eines unterhalb der Oberseite (18) des Wärmetauscherelements (8, 10) angeordneten Profilteils (24) ausgebildet sind, dessen Anlage an der Oberseite (18) die Konfiguration der einzelnen Kammern (22) ausbildet.

8. Wärmetauscherelement nach einem der Ansprüche 1 bis 7, bei welchem ein als End- oder Anfangselement (10) ausgebildetes Wärmetauscherelement an einem seiner freien Enden einen rampenartigen, keilförmig ausgebildeten Bereich aufweist.

9. Wärmetauscherelement nach einem der Ansprüche 1 bis 8, bei welchem die Oberseite (18) eine Profilierung aufweist, die das Bilden eines Biofilms bzw. einer Sielhaut durch abfließendes Abwasser reduziert.

10. Rohrleitungssystem für Abwasserrohrleitungen, bestehend aus mehreren Abwasserrohrleitungen (4) und wenigstens einem oberirdischen Kanaleinstieg (2) eines bestimmten Durchmessers mit nachträglich in die Abwasserrohrleitung (4) eingebauten, miteinander verbundenen Wärmetauscherelementen (8, 10) nach einem der Ansprüche 1 bis 9, die ein Gerinne zur Leitung des Abwassers bilden, um Abwasserwärme zu nutzen,
wobei die Längs- bzw. Quererstreckung der Wärmetauscherelemente (8, 10) gleich oder kleiner ausgebildet ist als der lichte Durchmesser des Kanaleinstiegs (2).

11. Rohrleitunggsystem für Abwasserrohrleitungen nach Anspruch 10, bei welchem im Abwasserrohrleitungssystem mehrere voneinander beabstandete Strecken von miteinander verbundenen Wärmetauscherelementen (8) angeordnet sind.

12. Rohrleitungssystem für Abwasserrohrleitungen nach Anspruch 10 oder 11, bei dem der Auftrieb der in die Abwasserrohrleitung (4) eingebrachten Wärmetauscherelemente (8, 10) bei voll gefüllter Abwasserrohrleitung kleiner als deren Gewichtskraft ist.

13. Rohrleitungssystem für Abwasserrohrleitungen nach einem der Ansprüche 10 bis 12, bei welchem ein Spül- bzw. Schwallschieber zum zeitweisen Unterbrechen des Abwasserabflusses angeordnet ist.

## Claims

1. Heat exchanger element (8, 10) for installation in sewage pipelines (4), the top side (18) of which heat exchanger element has a heat-conducting exchange surface with heat exchanger chambers (22) arranged on it,
the heat exchanger element (8, 10) has in cross section a run-in gutter (14) and run-off surfaces (16) contiguous to the latter on both sides,
**characterized in that** in the region, formed as a free space, below the top side between the run-in gutter (14) and the run-off surfaces (16), lines (12) for the forward run, return run and distribution of a heat exchanger medium are arranged,
the floor point (20) of the run-in gutter (14), the lower region of the lines (12) and/or the free margins of the run-off surfaces (16) being designed as bearings for arranging the heat exchanger element (8, 10) in the sewage pipeline (4).

2. Heat exchanger element according to Claim 1, in which the heat exchanger element (8, 10) has in its end regions connecting configurations for the pressure-tight and tension-resistant connection of one or more further heat exchanger elements (8).

3. Heat exchanger element according to Claim 1 or 2, in which the heat exchanger chambers (22) are formed at least in the region of the run-in gutter (14).

4. Heat exchanger element according to one of Claims 1 to 3, in which the longitudinal or transverse extent of the heat exchanger element (8, 10) is selected such that the latter can be introduced through an overground conduit manhole (2) of the respective sewage pipeline (4) and does not overshoot preferably a length of 80 cm and particularly preferably a length of 62.5 cm.

5. Heat exchanger element according to one of Claims 1 to 4, the run-in gutter (14) being designed in the form of an arcuate portion.

6. Heat exchanger element according to one of Claims 1 to 4, in which its top side (18) consists of a corrosion-resistant material which does not reduce flow velocities, for example high-grade steel.

7. Heat exchanger element according to one of Claims 1 to 6, in which the heat exchanger chambers (22) are designed in the form of at least one profile part (24) which is arranged below the top side (18) of the heat exchanger element (8, 10) and whose laying against the top side (18) forms the configuration of the individual chambers (22).

8. Heat exchanger element according to one of Claims 1 to 7, in which a heat exchanger element designed as an end element or initial element (10) has at one of its free ends a ramp-like region of wedge-shaped design.

9. Heat exchanger element according to one of Claims 1 to 8, in which the top side (18) has a profiling which reduces the formation of a biofilm or of a sewer slime caused by outflowing sewage.

10. Pipeline system for sewage pipelines, consisting of a plurality of sewage pipelines (4) and of at least one overground conduit manhole (2) of a specific diameter, with interconnected heat exchanger elements (8, 10) according to one of Claims 1 to 9 which are installed subsequently in the sewage pipeline (4) and which form a raceway for conducting the sewage in order to utilize sewage heat, the longitudinal or transverse extent of the heat exchanger elements (8, 10) being designed to be identical to or smaller than the clear diameter of the conduit manhole (2).

11. Pipeline system for sewage pipelines according to Claim 10, in which a plurality of sections, spaced apart from one another, of interconnected heat exchanger elements (8) are arranged in the sewage pipeline system.

12. Pipeline system for sewage pipelines according to Claim 10 or 11, in which the buoyancy of the heat exchanger elements (8, 10) introduced into the sewage pipeline (4) is lower than their weight force in the case of a fully filled sewage pipeline.

13. Pipeline system for sewage pipelines according to one of Claims 10 to 12, in which a scouring or surge slide for the temporary interruption of the sewage outflow is arranged.

## Revendications

1. Elément d'échangeur de chaleur (8, 10) pour l'installation dans des conduites d'eaux usées (4) dont le côté supérieur (18) présente une surface d'échange thermoconductrice avec des chambres d'échangeur de chaleur (22) disposées sur celle-ci,
l'élément d'échangeur de chaleur (8, 10) présente un canal d'entrée (14) en coupe transversale et des surfaces d'écoulement (16) qui se raccordent à celui-ci des deux côtés, **caractérisé en ce que**
dans la région réalisée en tant qu'espace libre en dessous du côté supérieur entre le canal d'entrée (14) et les surfaces d'écoulement (16), des conduites (12) sont disposées pour l'alimentation, le retour et pour la distribution d'un milieu échangeur de chaleur, dans lequel
le point de base (20) du canal d'entrée (14), la région inférieure des conduites (12) et/ou les bords libres des surfaces d'écoulement (16) sont réalisés en tant qu'appui pour la disposition de l'élément d'échangeur de chaleur (8, 10) dans la conduite d'eaux usées (4).

2. Elément d'échangeur de chaleur selon la revendication 1, dans lequel l'élément d'échangeur de chaleur (8, 10) présente dans ses régions d'extrémité des configurations de raccord pour le raccord étanche à la pression et résistant à la traction d'un ou plusieurs autres éléments d'échangeur de chaleur (8).

3. Elément d'échangeur de chaleur selon la revendication 1 ou 2, dans lequel les chambres d'échangeur de chaleur (22) sont réalisées au moins dans la région du canal d'entrée (14).

4. Elément d'échangeur de chaleur selon l'une quelconque des revendications 1 à 3, dans lequel l'étendue longitudinale ou transversale de l'élément d'échangeur de chaleur (8, 10) est choisie de sorte qu'il peut être introduit à travers un accès de canal aérien (2) de la conduite d'eaux usées concernée (4) et ne dépasse de préférence pas une longueur de 80 cm et de manière particulièrement préférée une longueur de 62,5 cm.

5. Elément d'échangeur de chaleur selon l'une quelconque des revendications 1 à 4, dans lequel le canal d'entrée (14) est réalisé sous forme d'une section arquée.

6. Elément d'échangeur de chaleur selon l'une quelconque des revendications 1 à 4, dans lequel son côté supérieur (18) se compose d'un matériau résistant à la corrosion et ne réduisant pas la vitesse d'écoulement, par exemple d'acier spécial.

7. Elément d'échangeur de chaleur selon l'une quelconque des revendications 1 à 6, dans lequel les chambres d'échangeur de chaleur (22) sont réalisées sous la forme d'au moins une partie profilée (24) disposée en dessous du côté supérieur (18) de l'élément d'échangeur de chaleur (8, 10) dont l'appui sur le côté supérieur (18) réalise la configuration des chambres individuelles (22).

8. Elément d'échangeur de chaleur selon l'une quelconque des revendications 1 à 7, dans lequel un élément d'échangeur de chaleur réalisé en tant qu'élément de fin ou de début (10) présente à une de ses extrémités libres une région de type rampe, réalisée en forme de coin.

9. Elément d'échangeur de chaleur selon l'une quelconque des revendications 1 à 8, dans lequel le côté supérieur (18) présente un profilage qui réduit la formation d'un biofilm ou d'une peau d'égout par les eaux usées qui s'écoulent.

10. Système de conduites pour conduites d'eaux usées, constitué de plusieurs conduites d'eaux usées (4) et d'au moins un accès de canal aérien (2) d'un diamètre déterminé avec des éléments d'échangeur de chaleur (8, 10) installés ultérieurement dans la conduite d'eaux usées (4), reliés entre eux selon l'une quelconque des revendications 1 à 9, qui forment un canal pour la conduite des eaux usées pour exploiter la chaleur des eaux usées,
dans lequel l'étendue longitudinale ou transversale des éléments d'échangeur de chaleur (8, 10) est réalisée de manière inférieure ou égale au diamètre intérieur de l'accès de canal (2).

11. Système de conduites pour conduites d'eaux usées selon la revendication 10, dans lequel plusieurs segments écartés les uns des autres d'éléments d'échangeur de chaleur reliés entre eux (8) sont disposés dans le système de conduites d'eaux usées.

12. Système de conduites pour conduites d'eaux usées selon la revendication 10 ou 11, dans lequel la poussée verticale des éléments d'échangeur de chaleur (8, 10) montés dans la conduite d'eaux usées (4) est inférieure à son poids en cas de conduite d'eaux usées remplie.

13. Système de conduites pour conduites d'eaux usées selon l'une quelconque des revendications 10 à 12, dans lequel un clapet de chasse ou une vanne d'arrêt de jet d'eau est disposé(e) pour l'interruption temporaire de l'écoulement d'eaux usées.
